Europäisches Patentamt

European Patent Office

Office européen des brevets

(11) Publication number: **0 355 952**
**A2**

# EUROPEAN PATENT APPLICATION

(21) Application number: **89305502.0**

(51) Int. Cl.⁴: **H04B 10/10**

(22) Date of filing: **01.06.89**

(30) Priority: **24.08.88 GB 8820076**

(43) Date of publication of application:
**28.02.90 Bulletin 90/09**

(84) Designated Contracting States:
**DE FR IT NL SE**

(71) Applicant: **STC PLC**
**10, Maltravers Street**
**London, WC2R 3HA(GB)**

(72) Inventor: **McEwen, Colin Dougal**
**4, Wentworth Drive**
**Bishop's Stortford, Herts CM23 2PB(GB)**

(54) **Optical communication system.**

(57) An optical communication system comprising a plurality of static terminals (POS) each having optical transmitter/receiver means, and a unit (CU) having arrays of optical transmit/receive devices and optics placed in front of the arrays whereby when the unit is located within optical range of the terminals the transmit/receive means of each terminal is focussed onto respective transmit/receive devices of the arrays.

Fig.1.

EP 0 355 952 A2

## OPTICAL COMMUNICATION SYSTEM

This invention relates to an optical communication system providing cordless two-way digital communications between a plurality of static terminals dispersed in a common room, hall, office or like space and a remote data processing unit or computer.

Point-to-point infra-red communication links are known. The Sunday Times newspaper of January 15, 1984, discloses a single two-way point-to-point infra-red link system made by Modular Technology of Bicester, Oxfordshire. Simple one-way point-to-point infra-red links are commonly found in many fields, such as domestic remote controllers for television sets and video tape recorders.

In industry and commerce it is frequently desirable to have a number of terminals communicating with a central data processor or computer. For example, in a large shop many modern electronic point-of-sale (POS) terminals on a sales floor may be linked to a common computer. Conventionally, such POS terminals will be connected to the computer by means of coaxial cabling which is either run in underfloor ducts (for permanently sited terminals) or brought down from overhead points provided in the ceiling. The latter method can provide a certain amount of flexibility in that many commercial premises nowadays use suspended ceilings with readily replaceable panels allowing easy access to free-run cabling in the space above the ceiling. Nevertheless redeployment of the EPOS terminals requires considerable work and the cable drops may be considered unsightly.

According to the present invention there is provided an optical communication system comprising a plurality of static terminals each having optical transmitter and optical receiver means, and a unit having a plurality of optical transmitter devices and a plurality of optical receiver devices, characterised in that the unit is provided with optics placed in the front of the unit whereby when the unit is located within optical range of the terminals the transmitter and receiver means of each terminal is focussed onto respective receiver and transmitter devices of the unit.

Embodiments of the invention will now be described with reference to the accompanying drawings in which:

Figure 1 is a schematic illustration of the components of an optical communication system,

Figure 2 illustrates the principle of operation of the system of Figure 1,

Figure 3 illustrates a basic one-way infra-red link,

Figure 4 illustrates a practical one-way infra-red link,

Figure 5 illustrates the principle of a basic two-way link, and

Figure 6 illustrates the principle of a substantially colinear two-way link.

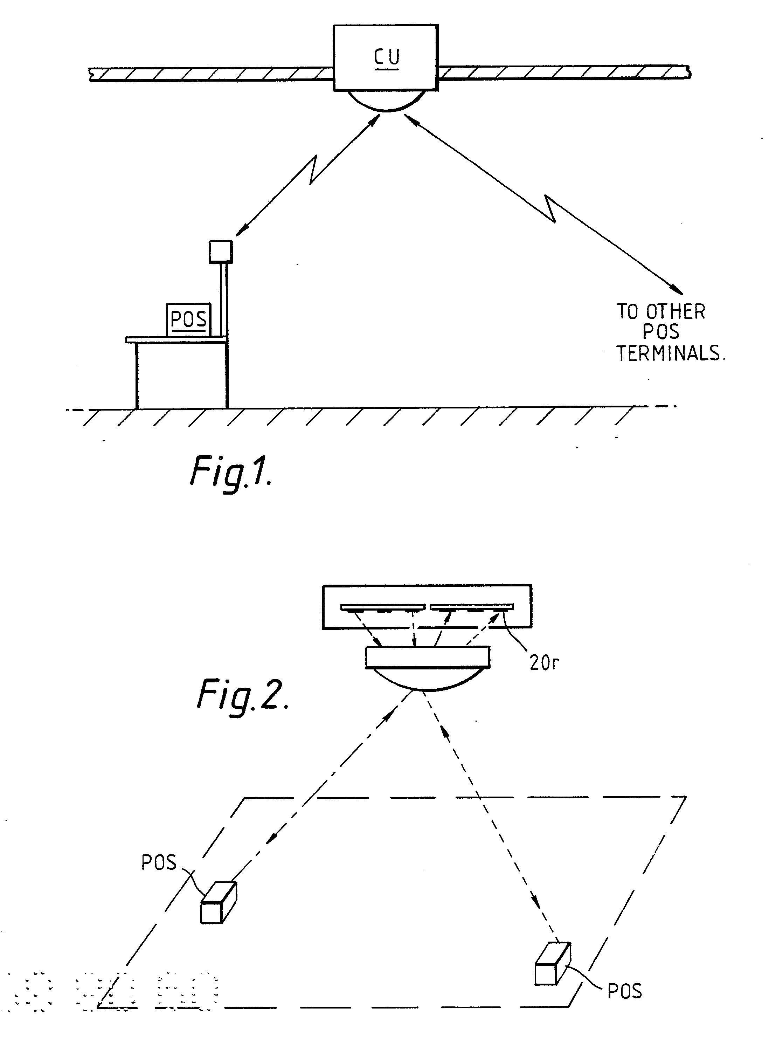

Figure 1 shows the basic components of an optical communication system in which a single overhead or ceiling unit (CU) serves several electronic point-of-sale terminals or POS units. Typically many POS units are located in various positions on a sales floor in a shop and although they can be considered as static units they can be re-positioned from time to time when the sales floor layout is re-organised. The main criteria to be observed is that each POS unit has an uninterrupted line of sight to the ceiling unit CU. In a large store with considerable floor space and perhaps supporting pillars or tall display units it may be convenient to provide more than one ceiling unit to cover the entire floor area.

Both the POS and CU units contain an infra-red transmitter and receiver, together with some local intelligence. The ceiling unit has a large number of transmitter and receiver devices arranged in substantially two-dimensionals array together with wide angle optics to provide separate services to each POS terminal that is within the field-of view of the ceiling unit. A system controller associated with a central computer (not shown) organises the communication protocols so that orderly transfers of data between the POS terminals are achieved. Each POS terminal has an individual address (in the data domain) and will appear in a particular beam of one or more ceiling units (in the spatial domain). Conversley each POS terminal may be able to communicate with more than one ceiling terminal and hence each CU can have an individual data address as well. Messages may be addressed to all POS units directly by arranging that POS units have a broadcast address receive-only capability.

The invention provides a point-to-multipoint system where all terminals are imaged onto different parts of the CU arrays. The ceiling unit, Figure 2, has separate arrays of infra-red transmitter and receiver devices 20t, 20r arranged in close proximity. Beneath the arrays i.e. in the front of the unit are optics 21. The arrangement of the unit is such that each array corresponds to an image of the shop floor layout so that the transmitter and receiver of each POS terminal will be imaged onto the corresponding infra-red devices in the arrays. Each photodiode in the receiver array will receive radiation from a particular special area. The optics act as a beamformer forming multiple beams in different directions, one beam for each POS terminal. Conversely radiation emitted from each transmitter device in the other array, e.g. an LED, will be focussed onto a particular part of the floor area where a POS terminal is or can be located.

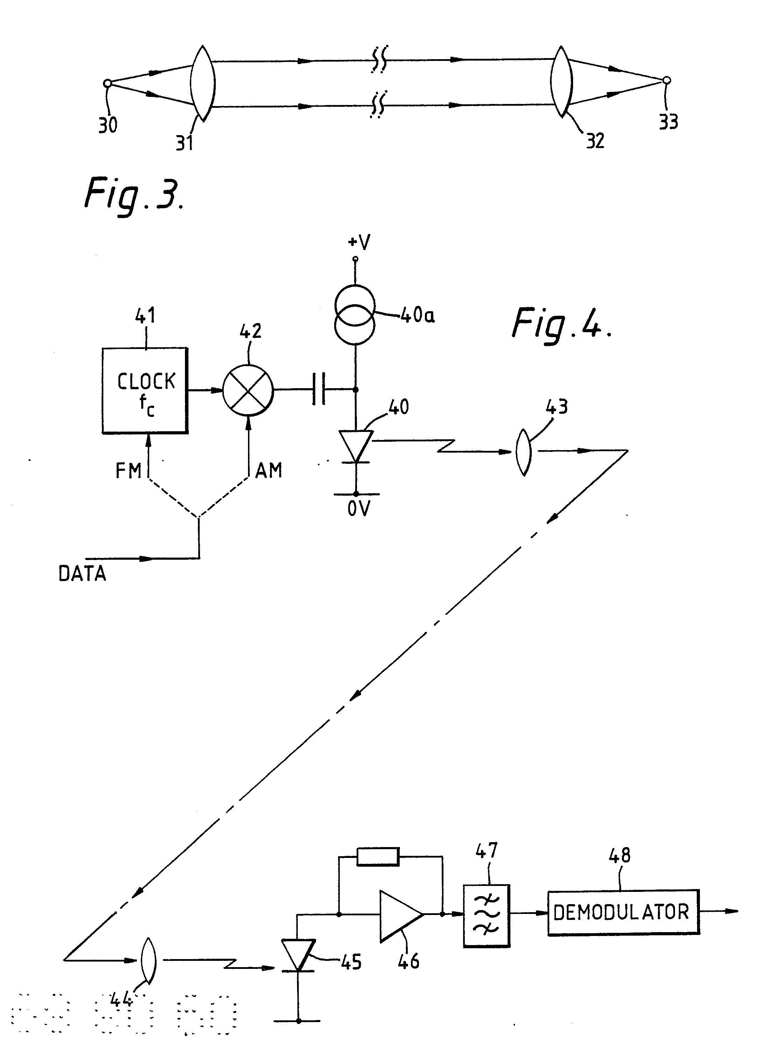

In a preferred embodiment each POS terminal communicates with a ceiling unit via a full duplex link. A basic one-way infra-red link is shown in Figure 3. An infra-red source 30, incoherent generator such as a light emitting diode (LED) or a coherent source such as a laser, is placed at the focus of a lens 31 in order to produce a collimated beam of radiation. This beam propagates towards the receiver where it is focussed by a second lens 32 onto a detector 33, typically a PIN photodiode. If the source is energised with a direct current then a constant photocurrent will be obtained from the photodiode. If alternating current modulation is added to the dc drive to the source then ac modulation will be observed in the photocurrent. There will always be some background infra-red illumination plus some dark current in the photodiode. An infra-red bandpass filter can be interposed in front of the lens to deal with any response to visible light. In addition ac modulation can be used to provide some discrimination against infra-red radiation from ordinary lights. Additional signalling frequencies can be used to discriminate against other nearby similar installations which could cause interference.

Figure 4 shows an embodiment of a one-way link. The infra-red source 40 is fed with dc bias from a constant current generator 40a. A clock source 41 generates an ac drive at a frequency $f_c$ which is modulated by incoming data. The modulation can be either FM at the clock source or AM applied via a mixer 42. The modulated signal is transmitted from the source 40 via a lens 43 to the receiver. At the receiver the received infra-red signal is focussed by lens 44 onto a PIN photodiode 45. The modulated photocurrent is fed via amplifier 46 and bandpass filter 47, centred at $f_c$, to demodulator 48 where the data is recovered.

Background illumination will generate photocurrents which will not, in general, contain components at $f_c$ and hence these will be rejected by the bandpass filter.

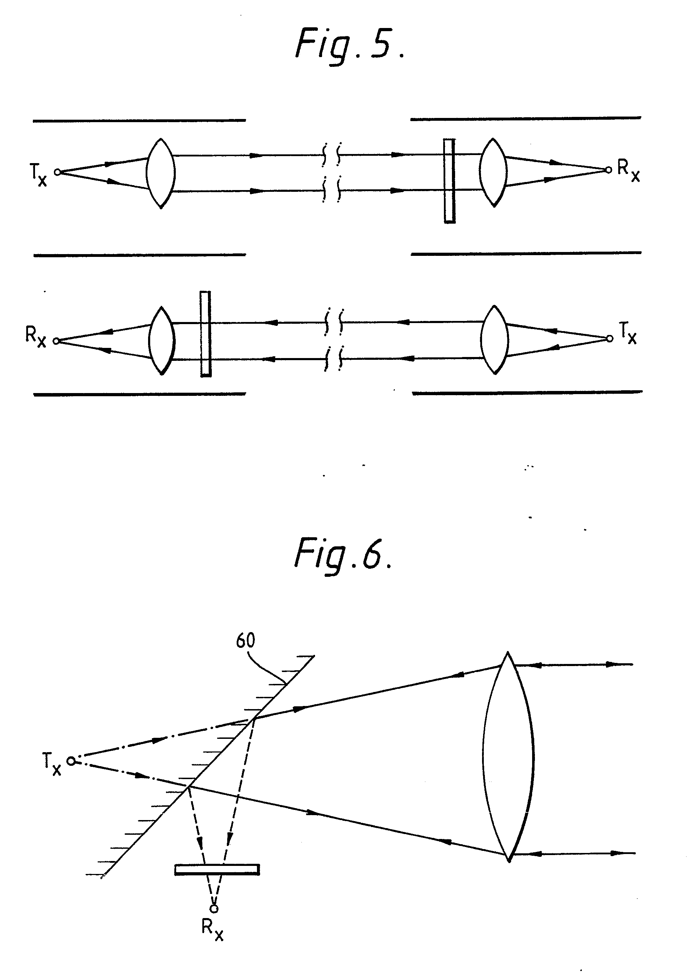

A two-way link can be implemented by using two separate one-way links, as shown in Figure 5. Each one-way link can operate independently if there is sufficient isolation between the closely spaced transmitter and receiver at each end. This isolation can be achieved by specially arranged optics, by shielding, by the use of different infra-red wavelengths plus discriminating filtering, or by the use of different ac frequencies. In practice a combination of two or more of these techniques may be necessary. Alternatively the two one-way links may be operated as "half duplex", where the two transmitters are operated in alternate time slots.

It is possible for the two one-way links to share the same optical system for the transmitter and receiver, as shown in Figure 6. In this case the transmit-receive isolation is limited by reflections on the optics to quite a poor value, perhaps 20dB. This makes it essential to employ modes of operation capable of dealing with this poor figure. For example the problem is substantially eliminated by using burst mode operation (i.e. half duplex) in conjunction with the shared optics. The colinear transmit and receive beams are separated at each end by the use of half silvered mirrors 60 set at preferably 45° to the beam axis.

The system had been described so far in terms of an imaging system at the ceiling unit. It is possible to use another imaging unit at the POS unit, which would enable the POS unit to discriminate between the various ceiling units which would be within the field of view. This offers two key advantages: (a) a method of implementing a multiply linked system, and (b) a method of dealing with finite spatial resolution.

The spatial resolution of the ceiling unit receiver is limited by the size of IR photodetector elements - this sets a much coarser limit than the effect of lens aberrations and finite aperture. This means that POS terminals very close together physically will have their signals received by the same detector, possibly causing garbled reception. One solution is to use error detecting codes to detect garbled signals then use the controller to address POS units individually to form a "map of the world" showing locations of POS terminals. If two terminals appear in the same ceiling unit (CU) beam, then other CU outputs are examined to find an alternate path to one of the POS units concerned. If this is not possible, the POS units must share uplink time - halving uplink rate.

Assume that a system is installed with two ceiling units, CU1 and CU2, and with four POS units, PU1-4.

The basic strategy is to create a "map of the world" in the controller memory, showing the position of each POS unit. This can be stored by listing each PU together with a list of those CU beams which can receive signals from that PU. This information can be obtained by searching each CU beam ( = photodetector output) for valid signals, or this information can be pre-loaded as part of the installation process. The result might appear as follows:

| POS Unit | CU1 | CU2 | (...CU-n) |
|---|---|---|---|
| 1 | Beam 5 | Beam 3 | (...) |
| 2 | Beam 3 | no signal | (...) |
| 3 | no signal | Beam 7 | (...) |
| 4 | Beam 7 | Beam 9 | (...) |

This is a relatively simple case, where each POS unit can be resolved by the optical system. Recall also that the effect of using an imaging system is that POS units in different physical locations will appear in different positions on the photodiode array, and hence in separate channels.

Once the map has been created, the controller can then allocate a transmit beam for each CU to the POS units. There is now a two-way link to each PU from one or more ceiling units.

The master controller sets up a timing reference for each PU, either by addressing each PU separately or by using the "broadcast address" facility. Each PU can then send requests for service to the controller by either a path or a time-slot known to be free from interference by other units. Similarly, the controller can send data to a PU by an interference-free link. (Note that the multibeam facility at the PU can be used to select which CU can receive transmissions from that PU).

If a POS terminal is moved, then in general it will not respond correctly to the map entries. This can be detected and the system can re-determine the map entries for that particular unit.

## Claims

1. An optical communication system comprising a plurality of static terminals each having optical transmitter and optical receiver means, and a unit having a plurality of optical transmitter devices and a plurality of optical receiver devices, characterised in that the unit is provided with optics placed in the front of the unit whereby when the unit is located within optical range of the terminals the transmitter and receiver means of each terminal is focussed onto respective receiver and transmitter devices of the unit.

2. An optical communication system according to claim 1 wherein the unit having the pluralities of optical trasmit/receive devices is adapted to be mounted in the ceiling.

3. An optical communication system according to claim 1 or 2 wherein communication between the static terminals and the unit is by two-way infra-red links.

4. An optical communication system according to claim 3 wherein each link is a full duplex link.

5. An optical communication system according to claim 4 wherein a.c. modulation is imposed on each link to provide discrimination against radiation from ordinary lights.

6. An optical system according to claim 3 wherein each link is provided by two one-way links operated in "half-duplex" mode, the two transmitters operating in alternate time slots.

7. An optical communication system according to claim 1 wherein the plurality of transmitter devices and the plurality of receiver devices in the unit are formed in separate two-dimensional arrays spaced apart, the optics including lens(es) and reflector(s) to focus coincident emitted and received radiation at the devices in the respective arrays.

8. An optical communication system according to claim 1 having two or more units each with pluralities of optical transmitter and receiver devices and optics, said units being spatially dispersed so that the transmitter and receiver means of each terminal is focussed onto respective transmitter and receiver devices of at least two units.

EP 0 355 952 A2

CU

TO OTHER
POS
TERMINALS.

POS

Fig.1.

Fig.2.

20r

POS

POS

*Fig.3.*

*Fig.4.*

30  31  32  33

+V

40a

41

CLOCK
f_c

42

40

43

FM    AM

DATA

47    48

DEMODULATOR

44    45    46

# Fig.5.

# Fig.6.